# EUROPEAN PATENT APPLICATION

(11) **EP 3 731 080 A1**
(43) Date of publication of application: **28.10.2020**
(21) Application number: 19753624.6
(22) Date of filing: 11.02.2019
(51) Int. Cl.: G06F 3/06, H04N 21/231

(54) **ELECTRONIC DEVICE AND CONTROL METHOD THEREFOR**

(30) Priority: 14.02.2018 KR 20180018554
(71) Applicant: Samsung Electronics Co., Ltd., Gyeonggi-do 16677 (KR)
(72) Inventor: MOK, Taeyang, Suwon-si, Gyeonggi-do 16677 (KR); JEON, Namjae, Suwon-si, Gyeonggi-do 16677 (KR)
(74) Representative: Taor, Simon Edward William
(86) International application number: PCT/KR2019/001637
(87) International publication number: WO 2019/160289

(57) **Abstract**

An electronic apparatus includes a processor that stores data of a first file in a data area of the storage unit in units of block; stores file information of the second file indicating a location of a first block corresponding to a part of the first file and usage information indicating a usage state of the first block by one or more files in an information area of the storage unit in response to a generation instruction of the second file corresponding to the part of the stored first file; reads the data of the first block at a location at which the file information of the second file stored in the information area is indicated in response to an execution instruction of the second file; and allows the usage information stored in the information area regarding the usage state of the block of the first file including the first block in response to a deletion instruction of the first file, and data of other files to be stored in a second block other than the first block among the blocks of the first file according to the changed usage information. As a result, the display device may maintain the derived content when the original content is deleted while minimizing the consumption of storage capacity when the derived content is generated.

## Description

### [Technical Field]

The present disclosure relates to an electronic apparatus for receiving, storing, and processing content data, and a control method thereof, and more particularly, to an electronic apparatus of a file management method of generating and storing separate additional content when generating the separate additional content by taking some data from predetermined original content stored in a storage unit, and a control method thereof.

### [Background Art]

In order to calculate and process predetermined information according to a specific process, an electronic apparatus basically including electronic components such as a CPU, a chipset, and a memory for arithmetic may be divided into various types depending on information to be processed or what an intended use is. Examples of the electronic apparatus include an information processing apparatus such as a PC or a server that processes general-purpose information, an image processing apparatus that processes image information, an audio apparatus that processes audio, a household appliance that performs household chores, and the like. Among them, the image processing apparatus that is frequently used receives predetermined content from the outside in a format such as a transport stream, and processes content data according to various processes. The image processing apparatus displays the processed data as an image on a display panel mounted therein, or outputs data to the corresponding display device so that the data is displayed as an image on another display device equipped with the display panel. A typical example of the image processing apparatus without the display panel may include a set-top box. The image processing apparatus having the display panel is in particular referred to as the display device, and examples thereof may include a TV, a monitor, a portable multimedia player, a tablet, a mobile phone, and the like.

The image processing apparatus may not only receive content from the outside, but also record and store the content through a recording function. However, according to a user request, separate content may be generated from the content stored in the image processing apparatus. For example, when original content is video data, a user may want to generate derived content such as highlight video by extracting a part of a playback section of video data stored in the image processing apparatus.

In the conventional image processing apparatus, when an event for generating the derived content occurs, a highlight section according to an input start point and an end point is set in the entire playback section of the original content stored in a storage unit. The image processing apparatus acquires data corresponding to the highlight section from the original content, and copies the acquired data as the derived content to the storage unit. That is, the original content data and the derived content data separately exist in the storage unit.

However, in this case, the original content data and the derived content data each occupy a storage area of the storage unit. Considering that a video content data capacity is increasing as an image quality and resolution of the image are increased according to the development of technology, additionally storing derived content in the storage unit having a limited storage capacity may be a burden to a user.

### [Disclosure]

### [Technical Solution]

According to an aspect of the present disclosure, an electronic apparatus includes: a storage unit that is provided to store data of a file; and a processor that stores data of a first file in a data area of the storage unit in units of block, stores file information of a second file indicating a location of a first block corresponding to a part of the first file and usage information indicating a usage state of the first block by one or more files in an information area of the storage unit in response to a generation instruction of the second file corresponding to the part of the stored first file, reads data of the first block at a location at which the file information of the second file stored in the information area is indicated in response to an execution instruction of the second file, and changes the usage information stored in the information area regarding the usage state of the block of the first file including the first block in response to a deletion instruction of the first file and allows data of other files to be stored in a second block other than the first block among the blocks of the first file according to the changed usage information. As a result, the display device may maintain derived content when original content is deleted while minimizing the consumption of storage capacity when the derived content is generated.

The usage information may include count information that is assigned to a plurality of blocks of the storage unit and indicates the number of files using each of the blocks.

The processor may increase and decrease the count information of any of the blocks in response to a change in the number of files using any one of the blocks.

The processor may maintain data of any one of the blocks when the count information of any one of the blocks is equal to or greater than a preset value, and allow data of other files to be stored without maintaining the data of any one of the blocks when the count information of any one of the blocks is less than the preset value.

The processor may delete file information of the first file designating addresses of the blocks of the first file from the information area in response to the deletion instruction of the first file.

The processor may update the usage information to indicate that the first block is not used by the first file but is used by the second file in response to the deletion instruction of the first file.

The processor may perform processing to display a UI that enables a user to select a part of the entire playback section of the first file, and may generate the second file by some data of the first file selected through the UI.

The processor may determine the location of the first block used by the second file based on the file information of the first file received through the UI and information on a start point and a playback time of the second file in the entire playback section of the first file.

The processor may determine a playback section from a predetermined first time to a second time of the first file from the generation instruction of the second file, and adjust the first time to correspond to a video frame of an intra-picture (I-picture) that is temporally adjacent from the first time when the playback section does not satisfy a condition of group of pictures (GOP).

The processor may block data of other files from being stored in a block storing header information of the first file and a block storing payload data of the first file used by the second file among a plurality of blocks in which data of the first file is stored in response to a deletion instruction of the first file.

According to another aspect of the present disclosure, a control method of an electronic apparatus includes: storing data of a first file in a data area of the storage unit in units of block; storing file information of the second file indicating a location of a first block corresponding to a part of the first file and usage information indicating a usage state of the first block by one or more files in an information area of the storage unit in response to a generation instruction of the second file corresponding to a part of the stored first file; reading the data of the first block at a location at which the file information of the second file stored in the information area is indicated in response to an execution instruction of the second file; and changing the usage information stored in the information area regarding the usage state of the block of the first file in response to a deletion instruction of the first file, and allowing data of other files to be stored in a second block other than the first block among the blocks of the first file according to the changed usage information.

### [Description of Drawings]

FIG. 1 is a block configuration diagram of a display device according to an embodiment of the present disclosure.
FIG. 2 is a flowchart illustrating a method of controlling a display device according to an embodiment of the present disclosure.
FIG. 3 is a block diagram illustrating a configuration of an HDD of the display device according to the embodiment of the present disclosure.
FIG. 4 is an exemplary diagram illustrating UI environment for setting highlights of content displayed by the display device according to the embodiment of the present disclosure.
FIG. 5 is a block diagram illustrating a process in which the display device according to the embodiment of the present disclosure generates a highlight video file in response to an event from an application.
FIG. 6 is an exemplary diagram illustrating a connection relationship between file information of metadata and a storage block storing a file in a display device according to an embodiment of the disclosure to be compared.
FIG. 7 is an exemplary diagram illustrating a connection relationship between file information of metadata and a storage block storing a file in the display device according to the embodiment of the present disclosure.
FIG. 8 is an exemplary diagram illustrating a method of performing, by the display device according to the embodiment of the present disclosure, reference count numbering on a storage block of a storage unit in which an original video file is stored.
FIG. 9 is an exemplary diagram illustrating a method of performing, by the display device according to the embodiment of the present disclosure, reference count numbering on the storage block of the storage unit when a highlight video file is generated.
FIG. 10 is an exemplary diagram illustrating a method of performing, by the display device according to the embodiment of the present disclosure, reference count numbering on a storage block of a storage unit in an event of deletion of an original video file.
FIG. 11 is a flowchart illustrating a method of adjusting, by the display device according to the embodiment of the present disclosure, a reference count number of a storage block in response to a file storage event.
FIG. 12 is a flowchart illustrating a method of adjusting, by the display device according to the embodiment of the present disclosure, a reference count number of a storage block in response to a file deletion event.
FIG. 13 is an exemplary diagram illustrating an aspect in which the display device according to the embodiment of the present disclosure generates one derived content file from a plurality of original files.
FIG. 14 is an exemplary diagram illustrating an aspect in which the display device according to the embodiment of the present disclosure generates one derived content file from a plurality of original files by adjusting a data order.
FIG. 15 is a flowchart illustrating a method of determining, by the display device according to the embodiment of the present disclosure, a storage block of original content corresponding to a received start point and end point.
FIG. 16 is an exemplary diagram illustrating a method of adjusting, by the display device according to the embodiment of the present disclosure, reference count numbers of each storage block when an original file is deleted.
FIG. 17 is a flowchart illustrating a method of adjusting, by the display device according to the embodiment of the present disclosure, reference count numbers of each storage block when header information for a derived content file is separately generated.

### [Mode for Disclosure]

Hereinafter, embodiments according to the present disclosure will be described in detail with reference to the accompanying drawings. Embodiments described with reference to each drawing are not mutually exclusive configurations unless otherwise specified, and a plurality of embodiments may be selectively combined and implemented in one device. The combination of the plurality of embodiments may be arbitrarily selected and applied by a person skilled in the art of the present disclosure in implementing the spirit of the present disclosure.

If there are terms including an ordinal number like a first component, a second component, and the like in embodiments, these terms are used to describe various components and distinguish one component from other components, and therefore the meaning of these components are not limited by terms. Terms used in the embodiments are applied to describe the embodiments, and do not limit the spirit of the present disclosure.

In addition, in the case where the expression "at least one" of a plurality of components in the present specification appears, the expression refers to not only all of the plurality of components, but each one excluding the rest of the plurality of components or all combinations thereof.

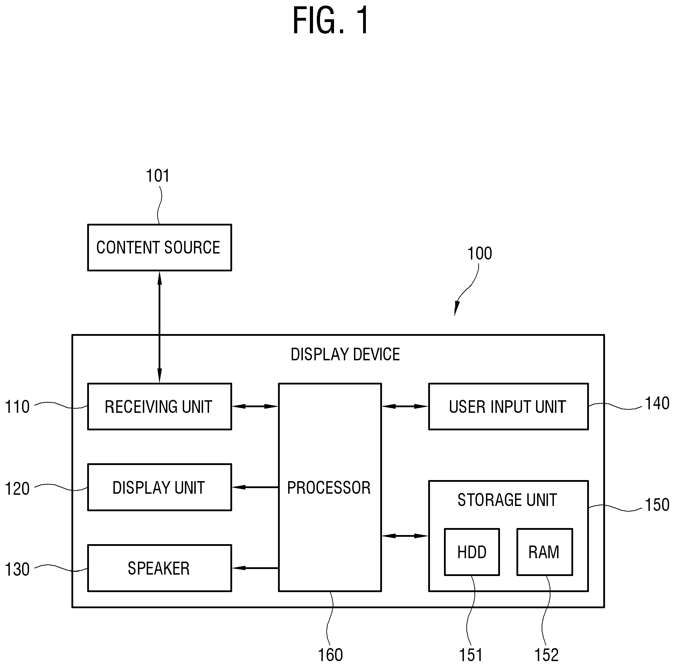

FIG. 1 is a block configuration diagram of a display device according to an embodiment of the present disclosure.

As illustrated in FIG. 1, a display device 100 is described in the present embodiment. However, the idea of the present disclosure can be implemented not only in the display device 100, but also in various types of electronic apparatuses provided to store predetermined original content data and generate derived content from the stored original content data. Such an electronic apparatus may be embodied as various types of apparatuses such as a TV, a desktop or a laptop computer, a tablet computer, a mobile phone, a portable multimedia player, a wearable device, a video wall, an electronic frame, and household appliances.

The display device 100 includes a receiving unit 110 that receives a transport stream including predetermined content data from a content source 101, a display unit 120 that displays an image based on the content data, and a speaker 130 that outputs audio, a user input unit 140 on which a user performs input manipulation, a storage unit 150 that stores data, and a processor 160 that performs processing of the content data and processing for an operation of the display device.

The receiving unit 110 is a communication circuit that includes a data input/output interface in which communication modules, ports, or the like corresponding to various types of communication protocols are combined. The receiving unit 110 basically receives a transport stream from the content source 101, but is provided to transmit and receive a signal in both directions. The receiving unit 110 according to the present embodiment is connected to the content source 101 through various types of wired or wireless communication protocols.

The display unit 120 includes a display panel that may display an image on a screen. The display panel is provided as a light-receiving structure such as a liquid crystal type or a self-luminous structure such as an OLED type. The display unit 120 may additionally include additional components depending on the structure of the display panel. For example, if the display panel is the liquid crystal type, the display unit 120 further includes a backlight unit that supplies light to a liquid crystal display panel, a panel driving substrate that drives liquid crystal of the liquid crystal display panel, and the like.

The speaker 130 outputs an audio signal as sound. The speaker 130 may include a unit speaker that is provided to correspond to audio data of any one audio channel, and include a plurality of unit speakers each of which correspond to audio data of a plurality of audio channels.

The user input unit 140 transmits predetermined control commands or information to the processor 160 according to a user's manipulation or input. The user input unit 140 may be implemented in various forms according to an information input method, and includes various user interface environments installed on the display device 100 such as a key installed on the outside of the display device 100, a touch screen installed on the display unit 120, and a camera and a sensor that photographs or detects a user's gesture or the like. Alternatively, the user input unit 140 may include a remote controller physically separated from the display device 100.

The storage unit 150 is accessed by the processor 160, and operations such as reading, writing, modifying, deleting, and updating of data are performed according to the control of the processor 160. The storage unit 150 includes a nonvolatile memory 151 such as a flash memory, a hard-disc drive, and a solid-state drive (SSD) that may store data regardless of whether or not the display device 100 is supplied with power, and a volatile memory 152 such as such as a buffer and a RAM into which data for processing is loaded.

The nonvolatile memory 151 such as an HDD stores data in units of storage blocks. That is, the nonvolatile memory 151 includes a plurality of storage blocks, and divides data and stores the divided data in each storage block. Information regarding which data is stored in which storage block is separately recorded in the nonvolatile memory 151. A more detailed description of the nonvolatile memory 151 as described above will be described later.

The processor 160 performs content processing on content data of the transport stream received by the receiving unit 110 to display a content video on the display 120. The processor 160 extracts video data from the content data, decodes the video data, and outputs the decoded video data to the display unit 120. The processor 160 includes a hardware processor implemented as a CPU, a chipset, a buffer, a circuit, and the like that are mounted on a printed circuit board, and may be implemented as a system on chip (SOC) depending on the design method. The processor 160 includes modules corresponding to various processes such as a demultiplexer, a decoder, a scaler, an audio DSP, and an amplifier, and some of them may be implemented as an SOC. For example, a module related to image processing such as the demultiplexer, the decoder, and the scaler may be implemented as an image processing SOC, and an audio DSP may be implemented as a separate chipset from the SOC.

In addition, the processor 160 according to the present embodiment supports a personal video recording (PVR) function, and transmits content data to the nonvolatile storage unit 150 such as an HDD or flash memory according to a user's input or a preset schedule. Subsequently, the processor 160 may display the content video based on the content data stored in the storage unit 150 instead of receiving the content data from the content source 101 through the receiving unit 110.

However, according to the user request, some of the content data stored in the storage unit 150 may be obtained to generate content separate from the original content. For convenience, the content pre-stored in the storage unit 150 is referred to as original content, and content generated by some of the original content data is referred to as derived content. As an example in which the derived content is generated from the original content, a clip image in which some highlight sections are extracted in the entire playback section of the video content may be generated.

Hereinafter, a description will be given of an operation in which the display device according to the present embodiment generates the derived content from the pre-stored original content and stores the generated derived content.

When receiving a generation instruction of a second file as the derived content that includes some data of a first file which is the original content stored in the storage unit 150, the processor generates file information of the second file designating an address of the storage block of the storage unit 150 in which the some data is stored, and stores usage information indicating that the storage block designated by the file information is used by the first file and the second file. Since the second file uses data of the first file that is pre-stored, the second file does not actually occupy additional storage capacity in the storage unit 150.

In addition, when receiving a deletion instruction of the first file while the first file and the second file are stored as described above, the processor 160 changes the pre-stored usage information regarding the usage state of the storage block in which the data of the first file is stored. The processor 160 maintains data of the storage block used by the second file among a plurality of storage blocks in which the data of the first file is stored according to the changed usage information, and allows data of other files to be stored in the remaining storage blocks not used by the second file.

As a result, the display device may maintain the derived content when the original content is deleted while minimizing the consumption of storage capacity when the derived content is generated.

Hereinafter, a control method of the display device according to the present embodiment will be described.

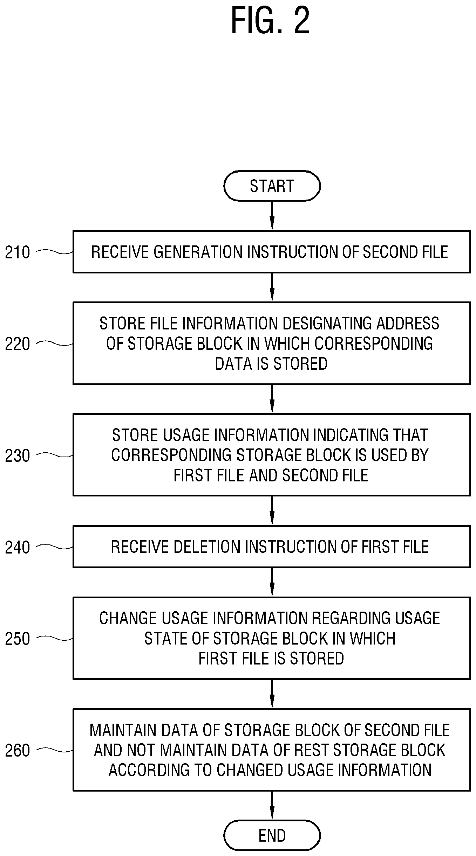

FIG. 2 is a flowchart illustrating a control method of the display device according to the embodiment of the present disclosure.

As illustrated in FIG. 2, the following control operation of the display device is executed by the processor of the display device.

In operation 210, the display device receives the generation instruction of the second file while the first file is stored. Here, the generation instruction of the second file instructs the second file to use some of the data of the first file. If the second file does not use the data of the first file, the display device newly stores the data of the second file in the storage block and stores the file information of the second file that designates the address of the storage block. However, in this embodiment, since the second file uses some of the data of the first file, the display device operates as follows.

In operation 220, the display device stores the file information of the second file that designates the address of the storage block in which the corresponding data is stored.

In addition, in operation 230, the display device stores usage information indicating that the storage block in which the corresponding data is stored is used by the first file and the second file. Thereby, the second file is stored in the display device.

In operation 240, the display device receives a deletion instruction of the first file.

In operation 250, the display device changes the usage information regarding the usage state of the storage block in which the first file is stored.

In operation 260, according to the changed usage information, the display device maintains the data of the storage block used by the second file among the storage blocks used by the first file, and does not maintain data of the remaining storage blocks not used by the second file. That is, the display device blocks data of other files from being stored in the storage block used by the second file, and allows the second file to be stored in the remaining storage blocks not used.

In this way, even if the first file as the original content is deleted, the display device may preserve the data of the second file as the derived content.

Hereinafter, a method of storing a predetermined content file in a storage unit such as an HDD will be described.

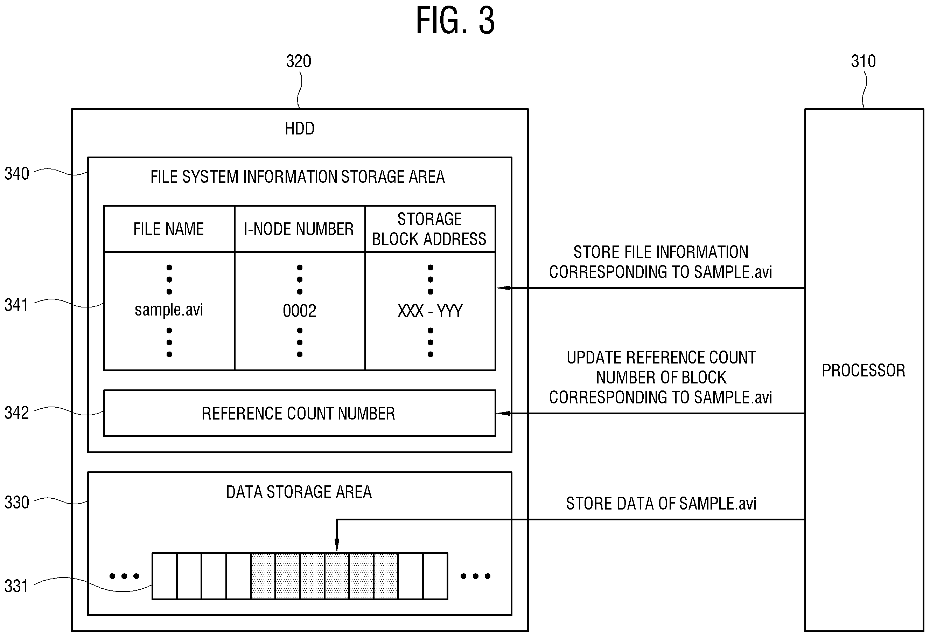

FIG. 3 is a block diagram illustrating a configuration of the HDD of the display device according to the embodiment of the present disclosure.

As illustrated in FIG. 3, the display device includes a processor 310 and an HDD 320 that stores data of a content file. In this embodiment, the case in which data is stored in the HDD 320 is described, but the same principle is applied to the case where data is stored in various types of nonvolatile memories such as a flash memory.

The HDD 320 includes a data storage area 330 in which data of a file is actually stored, and a file system information storage area 340 in which file system information related to the file stored in the data storage area 330, that is, metadata, is stored. The data storage area 330 stores data in units of a storage block 331.

Each storage block 331 has a preset data storage capacity, such as 4kB or 8kB. When one file is stored in the data storage area 330, the data of the file is distributed and stored in each storage block 331. Each storage block 331 has a number as identification information to be distinguished from the rest of the storage blocks 331, and this identification information includes, for example, an index number, an ID, an address code, and the like which are assigned to each storage block 331.

The metadata includes file information 341 corresponding to each file and block information 342 corresponding to each storage block 331.

The file information 341 is information related to a state in which each file is stored, that is, information that is referenced to allow the processor 310 to access a file stored in the data storage area 330. The files stored in the data storage area 330 each have corresponding file information 341, that is, one file has one file information 341. The file information 341 has a unique address, and if the address of the file information 341 is known, the processor 310 may find the storage block 331 of the file to which the file information 341 belongs.

In the case of the Linux operating system, the file information 341 is referred to as an I-node. The file information 341 includes a file name indicating the name of the file, an I-node number corresponding to the file name, and a number or address of the storage block 331 corresponding to the I-node number. The I-node number corresponds to a kind of identification name of the corresponding file that allows the processor 310 to find a predetermined file. For example, the processor 310 may find the I-node number corresponding to the file according to the file information 341, and access the number of the storage block 331 corresponding to the I-node number, thereby obtaining the data of the file.

The block information 342 includes a reference count number indicating the number of files occupied by each of the plurality of storage blocks 331. The block information 342 is an example of the usage information described above.

The block information 342 includes the number or address of each storage block 331 and the reference count number of each storage block 331. The reference count number indicates the number of files assigned to one storage block 331 or the number of files using the one storage block 331. That is, the reference count number of the predetermined storage block 331 indicates how many files to which the data stored in the corresponding storage block 331 are linked. For example, the storage block 331 having reference count number 1 is used by one file, and the storage block 331 having reference count number 0 is in an un-link state that is not used by any file.

The term "number" used in the above description is summarized again. The I-node number and the number of the storage block 331 have an ID function. That is, the I-node number is the ID of the file information 341, and each file information 341 has a different I-node number. Similarly, since the number of the storage block 331 is the ID of the storage block 331, each storage block 331 has a different number of the storage block 331. In contrast, the reference count number indicates the number of files using the corresponding storage block 331.

Hereinafter, a process in which the processor 310 stores a predetermined sample.avi in the HDD 320 will be described.

The processor 310 stores data of the sample.avi file in the storage block 331 in the un-link state among the plurality of storage blocks 331 in the data storage area 330.

The processor 310 stores the file information 341 corresponding to the sample.avi file in the file system information storage area 340 based on the storage state of the sample.avi file stored in the data storage area 330. The file information 341 corresponding to the sample.avi file includes a file name of the sample.avi, an I-node number of the sample.avi file, and a number of the storage block 331 in which data of the sample.avi is stored.

The processor 310 updates the reference count number of each storage block 331 in which the data of the sample.avi is stored, in the block information 342. For example, when the number of the storage block 331 in which the data of the sample.avi is stored is from XXX to YYY, the processor 310 adds the reference count numbers of the storage blocks 331 having these numbers by one to count the reference count numbers, and records the count result in the block information 342.

Subsequently, when the processor 310 wants to call the sample.avi stored in the HDD 320, the processor 310 may obtain the number of the storage block 331 in which the data of the sample.avi is stored from the file information 341 of metadata corresponding to the sample.avi, and access the storage block 331 having the corresponding number to obtain the data of the sample.avi.

The processor 310 according to the present embodiment can manage data in units of each storage block 331 in one file by utilizing the reference count number. More specific matters related to the reference count number will be described later.

Hereinafter, the user interface environment for generating the highlight video file from the original video content file will be described.

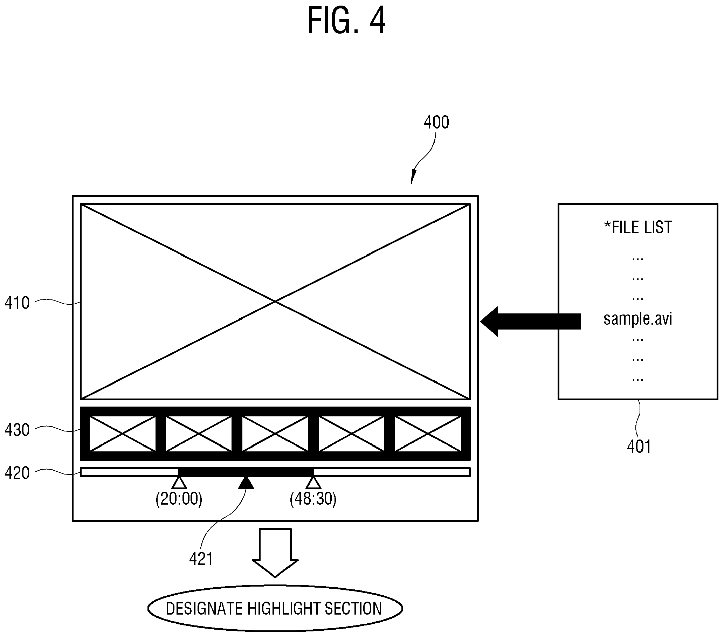

FIG. 4 is an exemplary diagram illustrating UI environment for setting highlights of content displayed by the display device according to the embodiment of the present disclosure.

As illustrated in FIG. 4, the display device displays a UI 400 that provides a user to play the original video content file and select a predetermined scene or playback section. The UI 400 may be implemented in any form within the scope of achieving of the object of the present disclosure. For example, the UI 400 includes a playback area 410 displaying a playback screen of the original file, a slide bar 420 representing the entire playback section and one playback point of the original file, a thumbnail area 430 representing some of key frames as a thumbnail in a section including a playback point indicated on the slide bar 420, and the like.

The display device may provide the user with a file list 401 regarding pre-stored files. For example, a case is considered in which a user selects a video content file called the sample.avi from the file list 401 and calls the sample.avi through a predetermined video editing application. The video editing application causes the UI 400 to be displayed and plays the sample.avi in the playback area 410.

The slide bar 420 represents the entire playback section from the start point to the end point of the sample.avi. One position of the slide bar 420 corresponds to one playback point in the entire playback section. When the user moves a marker 421 along the slide bar 420, a playback point of sample.avi corresponding to the indicated position of the corresponding marker 421 is selected, and a scene of the playback point is displayed in the playback area 410.

When a user wants to select a section from point 20:00 to point 48:30 in the entire playback section of the sample.avi, the user moves the marker 421 from the slide bar 420 to a position corresponding to the point 20:00 to designate a start position, and moves the marker 421 from the slide bar 420 to a position corresponding to the point 48:30 to designate an end position. When the user designates a highlight section between the start position and the end position, the display device operates to generate a highlight video file including the corresponding highlight section.

In this embodiment, a case has been described in which one highlight section is designated in one video content, but a plurality of highlight sections may be designated in one video content, or a highlight section may be selected in a plurality of video content.

As described above, the operation of designating the highlight section by the user is performed in an application space, but the operation of generating the highlight video file is performed in a kernel space, that is, by the operating system. Hereinafter, an operation of the display device for generating, by the operating system, a highlight video file in response to the user input described above will be described.

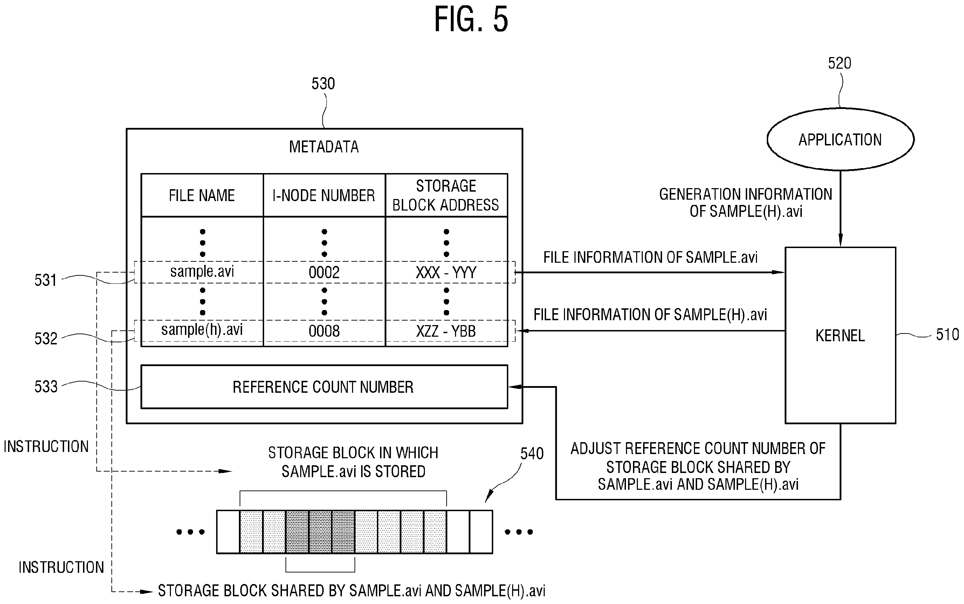

FIG. 5 is a block diagram illustrating a process in which the display device according to the embodiment of the present disclosure generates the highlight video file in response to an event from an application.

As illustrated in FIG. 5, an operating system or a kernel 510 executed by the processor of the display device includes generation information of a highlight video file sample(h).avi from an application 520. This generation information includes various information for generating the sample(h).avi from the original video file sample.avi. For example, the generation information includes doner_fd which is information for indicating file information 531 of the original video file, doner_start_offset which is information for indicating a start point of the highlight video selected from the original video file, doner_length which is information for indicating a length of the highlight video selected from the original video file, dest_fd which is information for indicating file information 532 of the highlight video file as a target file, dest_star_offset which is information for indicating a start point of the target file for linking the highlight video in the original video file, and the like. The names of these information are applied for convenience, and various names may be applied according to specifications.

The kernel 510 acquires the file information 531 of the sample.avi from metadata 530 according to the generation information received from the application 520. The kernel 510 determines a number of the storage block 540 in which data corresponding to the sample(h).avi is stored, based on the generated information, from the acquired file information 531 of the sample.avi. Accordingly, the kernel 510 may identify the storage blocks 540 in which the data corresponding to the sample(h).avi is stored, among a plurality of storage blocks 540 in which the sample.avi is stored.

When the storage blocks 540 storing the data corresponding to the sample(h).avi are identified, the kernel 510 generates the file information 532 of the sample(h).avi based on the identified result and records the generated file information in the metadata 530. The file information of the sample(h).avi includes a file name of the sample(h).avi, an I-node number corresponding to the file name, and a number of the storage block 540 in which data of the sample (h).avi corresponding to the I-node number is stored. Here, the number of the storage block 540 in which the data of the sample(h).avi is stored indicates the number of the storage block 540 shared by the sample(h).avi among the storage blocks 540 of the pre-stored sample.avi.

Also, the kernel 510 updates a block information 533 of the metadata 530 as follows. The kernel 510 determines the storage block 540 in which the data of the sample (h).avi is stored, that is, the storage block 540 shared by the sample.avi and the sample (h).avi. The kernel 510 adjusts and counts the reference count number of the determined storage block 540, and records the adjusted details in the block information 533. A detailed method of adjusting and counting the reference count number of the storage block 540 will be described later.

Hereinafter, the features of the embodiments of the present disclosure will be described in comparison with the embodiments of the disclosure to be compared.

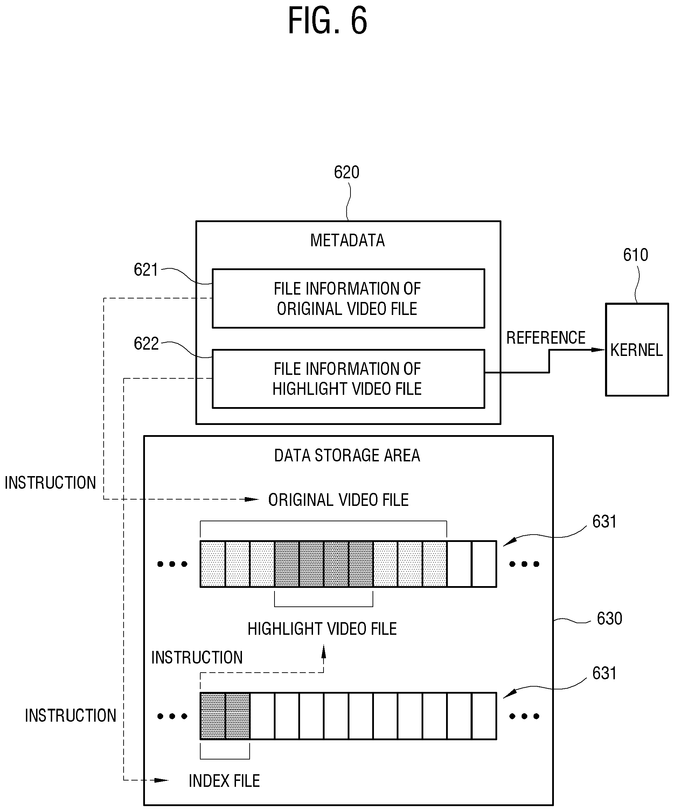

FIG. 6 is an exemplary diagram illustrating a connection relationship between file information of metadata and a storage block storing a file in a display device according to the embodiment of the present disclosure to be compared.

As illustrated in FIG. 6, a kernel 610 of the display device according to the embodiment of the disclosure to be compared may refer to file information 621 of an original video file in metadata 620 to identify a storage block 631 of the original video file stored in a data storage area 630 and refer to file information 622 of a highlight video file to identify the storage block 631 of the highlight video file.

Here, the file information 622 of the highlight video file does not indicate an address or number of the storage block 631 in which the data of the highlight video file shared with the original video file is stored, but indicates the number of the storage block 631 in which data of an index file is stored. The index file indicates the number of the storage block 631 in which the data of the highlight video file is stored. Therefore, the kernel 610 according to the disclosure to be compared refers to the file information of the highlight video file to identify the storage block 631 in which the index file is stored in the data storage area 630, and again refers to the index file to identify the storage block 631 in which the data of the highlight video file is stored.

In such a structure, the index file indicating the storage block 631 in which the data of the highlight video file is stored is separately provided, thereby reducing the storage capacity of the data storage area 630 as compared with the case of copying the data of the highlight video file. However, if the original video file is deleted, the data of the highlight video file is also deleted from the data storage area 630, thereby making the index file useless.

In contrast, the display device according to the embodiment of the present disclosure has the following structure.

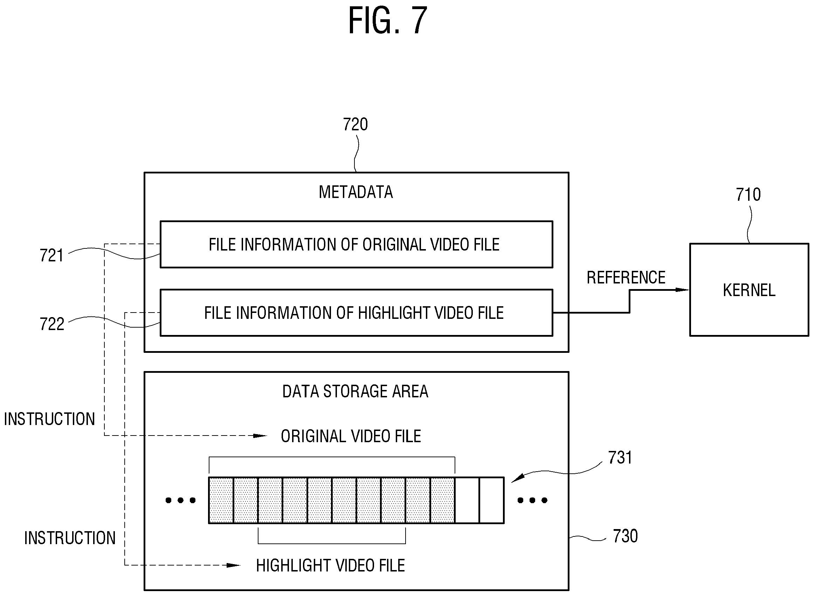

FIG. 7 is an exemplary diagram illustrating a connection relationship between the file information of the metadata and the storage block storing the file in the display device according to the embodiment of the present disclosure.

As illustrated in FIG. 7, a kernel 710 of the display device according to the embodiment of the present disclosure may refer to file information 721 of an original video file in metadata 720 to identify a storage block 731 of an original video file stored in a data storage area 730 and refer to file information 722 of a highlight video file to identify the storage block 731 of the highlight video file.

Here, the file information 722 of the highlight video file directly indicates the number of the storage block 731 in which the data of the highlight video file shared with the original video file is stored, not the index file in the embodiment of the disclosure to be compared described above. That is, the kernel 710 may refer to the file information 722 of the highlight video file to directly identify the storage block in which the highlight video file is stored in the data storage area 730.

As described above, in the embodiment of the present disclosure, when some data of the original video file is used as the highlight video file, unlike the embodiment of the disclosure to be compared described above, the index file is not used, and the kernel 710 is provided to access the data of the highlight video file by the file information 722 of the metadata 720. Therefore, in this embodiment, the storage capacity of the highlight video file in the data storage area is indicated as 0.

When the original video file is deleted, the kernel 710 according to the present embodiment maintains the data of the storage block 731 shared with the highlight video file among the storage blocks 731 in which the data of the original video file is stored, and makes the storage blocks 731, which are not shared with the highlight video file, into the un-link state. Thereby, even if the original video file is deleted, the data of the highlight video file can be maintained. It is determined based on the reference count numbers of each storage block 731 whether each storage block 731 is shared by the original video file and the highlight video file or is used only by the original video file. A detailed description thereof will be provided below.

Hereinafter, a method of counting and recording, by the display device, the reference count number of the storage block will be described.

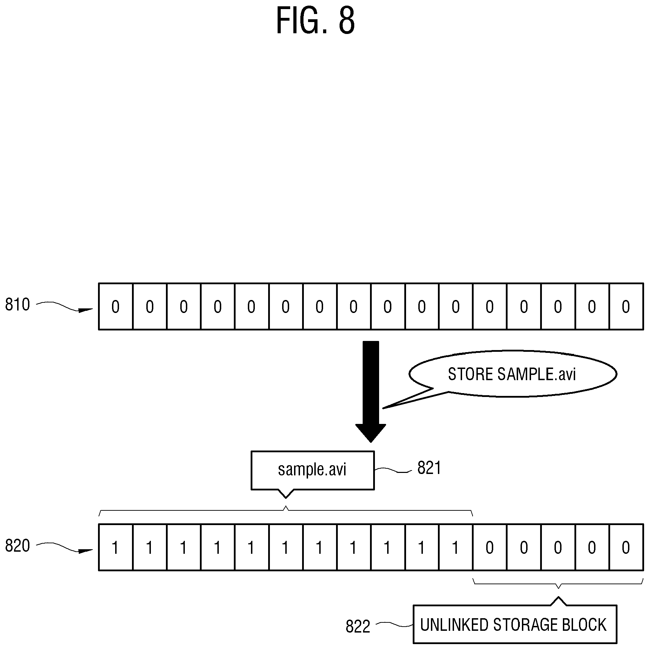

FIG. 8 is an exemplary diagram illustrating a method of performing, by the display device according to an embodiment of the present disclosure, reference count numbering on a storage block of a storage unit in which an original video file is stored.

As illustrated in FIG. 8, when the plurality of storage blocks in the storage unit are in the un-link state in which the plurality of storage blocks are not linked to any file, the display device counts the reference count numbers of each storage block as 0 to designate the reference count number. The reference count numbers of each storage block are recorded in the block information of the metadata described above.

The fact that the storage block is in the un-link state means the state in which the record or change of data for the corresponding storage block is freely permitted by a predetermined file or process. Therefore, the storage block in the un-link state may or may not actually have data, but since there is no linked file, the data of the storage block is meaningless. If the data of the predetermined file is stored in the storage block, the storage block is switched to a link state, and the address of the storage block corresponding to the file is recorded in the file system information, and the use of the storage block by other processes or files is restricted.

A case is considered in which a predetermined content file called sample.avi is stored in a storage block 820. In this case, the display device stores data of the sample.avi in some of storage blocks 821 among the plurality of storage blocks. At this point, the plurality of storage blocks are divided into the storage block 821 in which the sample.avi is stored, and an unlinked storage block 822 in which no file is stored. Here, the display device counts, as 1, the reference count numbers of each storage block 821 in which the sample.avi is stored to designate the reference count number, and maintains the reference count number of the unlinked storage block 822 as 0.

In this state, a method of generating, by the display device, a highlight video file in response to a generation event of a highlight video file received from an application will be described.

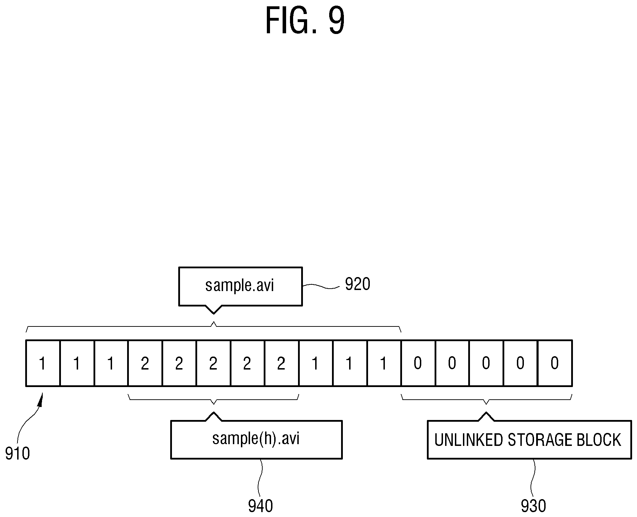

FIG. 9 is an exemplary diagram illustrating a method of performing, by the display device according to the embodiment of the present disclosure, the reference count numbering on the storage block of the storage unit when the highlight video file is generated.

As illustrated in FIG. 9, when a generation event of the highlight video file sample(h).avi from the original video file sample.avi occurs, the display device determines a storage block 940 that are shared by the original video file and the highlight video file among a plurality of storage blocks 910. The display device adds 1 to the reference count number 1 of the determined storage block 940.

Accordingly, the plurality of storage blocks 910 each have a reference count number of any one of three values of 0, 1, and 2. Each of the storage blocks 920 that is linked to the original video file and is not linked to the highlight video file has a reference count number of 1. Each unlinked storage block 930 has a reference count number of 0. Each storage block 940 that is linked to the original video file and the highlight video file has a reference count number of 2.

In the state of FIG. 8, all storage blocks linked to the original video file commonly have the reference count number of 1. This is because only the original video file is linked to the storage block.

However, in this embodiment, some of the storage blocks 920 are not linked to the highlight video file, while the other storage blocks 940 are linked to the highlight video file. To distinguish this state, the display device changes the reference count numbers of some storage blocks 940 of the storage blocks 920 to 2 by additionally counting 1 in addition to the existing 1, and maintains the remaining reference count numbers as they are.

As described above, the reference count number of the predetermined storage block 910 indicates how many files the storage block 910 is referenced by or how many files the storage block 910 is allocated to. For example, if the predetermined storage block 910 is linked to three files, the reference count number of the corresponding storage block 910 will be 3.

The counting of the reference count number may be useful when a file is deleted. For example, a case is considered in which the user instructs the deletion of the highlight video file from the file list in the current state. The display device determines the storage block 940 linked to the highlight video file by referring to the metadata in response to the deletion instruction of the highlight video file. The display device subtracts the reference count number of the determined storage block 940 by 1. Then, the display device deletes the file information related to the highlight video file from the metadata.

In this case, the state of the reference count number of the storage block 910 becomes the state of the reference count number of the storage block 820 in FIG. 8. Even if the highlight video file has been deleted from the file list, the storage block 940 remains linked to the original video file. In this state, if the original video file is selected from the file list, the display device may acquire data of the original video file from the storage block 920 based on the metadata.

Meanwhile, a case in which the user instructs to delete the original video file from the file list in the state of FIG. 9 will be described below.

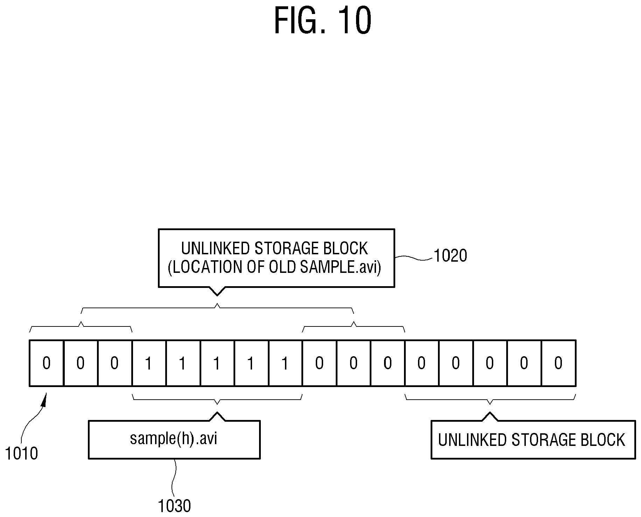

FIG. 10 is an exemplary diagram illustrating a method of performing, by the display device according to the embodiment of the present disclosure, the reference count numbering on the storage block of the storage unit in the event of deletion of the original video file.

As illustrated in FIG. 10, when a deletion instruction of the original video file is received from the file list, the display device determines storage blocks 1020 and 1030 linked to the original video file among a plurality of storage blocks 1010 based on the metadata. The display device subtracts each reference count number of the determined storage blocks 1020 and 1030 by 1.

In this case, the states of the reference count numbers of the storage blocks 1020 and 1030 are as follows. Prior to the deletion instruction of the original video file, the storage block 1020 is linked to the original video file and is not linked to the highlight video file, and the storage block 1030 is linked to both the original video file and the highlight video file. However, after the deletion instruction, the reference count number of the storage block 1020 changes from 1 to 0, and the reference count number of the storage block 1030 changes from 2 to 1.

According to the change in the reference count number, the storage block 1020 changes to the un-link state, and the display device allows the storage block 1020 to use a predetermined process or link a predetermined file. In this case, the display device deletes the file information of the original video file from the metadata. Then, the display device maintains the state in which the storage block 1030 is linked to the highlight video file, so the use of the predetermined process for the storage block 1030 or the link of the predetermined file to the storage block 1030 is blocked, and the data of the highlight image file is retained.

As described above, when the highlight video file is generated from the original video file, the display device according to the present embodiment minimizes the storage capacity of the highlight video file by sharing the data of the original video file. In addition, when the original video file is deleted, the display device according to the present embodiment does not delete the entire original video file, but maintains the shared data with the highlight video file, thereby preventing the highlight video file from being deleted due to the deletion of the original video file.

Hereinafter, a method of adjusting, by the display device, reference count numbers of each storage block in response to a file related event will be described.

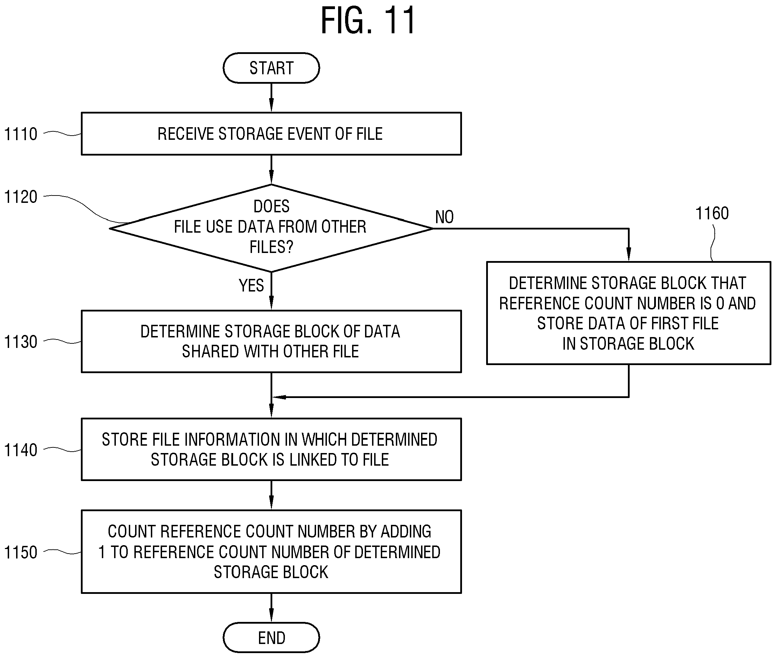

FIG. 11 is a flowchart illustrating a method of adjusting, by the display device according to the embodiment of the present disclosure, a reference count number of a storage block in response to a file storage event .

As illustrated in FIG. 11, the display device performs the following operations by the processor.

In operation 1110, the display device receives a storage event of a predetermined file.

In operation 1120, the display device determines whether the file uses data of other files that are pre-stored.

If it is determined that the file uses data of other files that are pre-stored, in operation 1130, the display device determines the storage block of the corresponding data shared with other files.

In operation 1140, the display device stores the file information obtained by linking the determined storage block to the file. Based on the file information, the display device may read data corresponding to the file from the storage block.

In operation 1150, the display device counts the reference count number by adding 1 to the reference count number of the determined storage block.

On the other hand, if it is determined that the file does not use the data of other files that are pre-stored, in operation 1160, the display device determines a storage block having a reference count number of 0, stores the data of the file in the corresponding storage block, and proceeds to operation 1140.

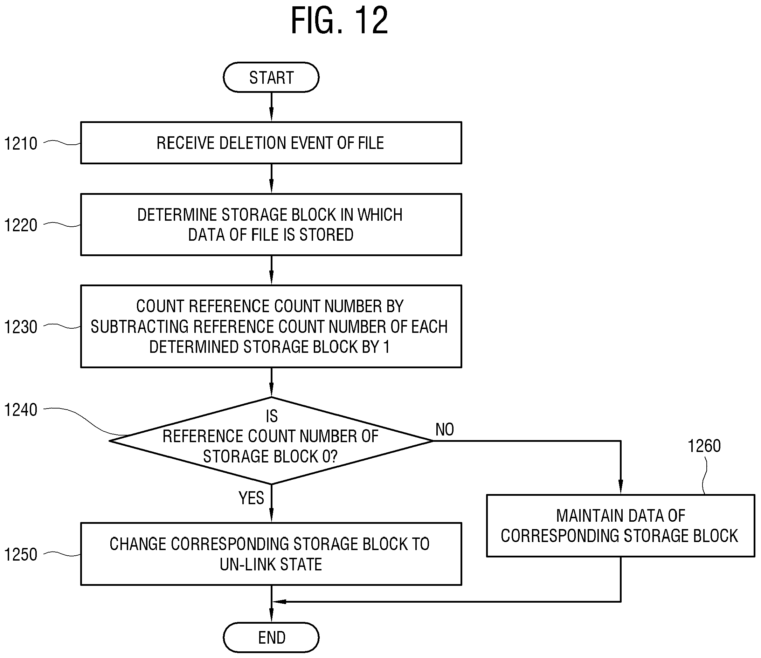

FIG. 12 is a flowchart illustrating a method of adjusting, by the display device according to the embodiment of the present disclosure, a reference count number of a storage block in response to a file deletion event.

As illustrated in FIG. 12, the display device performs the following operations by the processor.

In operation 1210, the display device receives a deletion event of a predetermined file.

In operation 1220, the display device determines a storage block in which data of a file is stored.

In operation 1230, the display device counts the reference count number by subtracting the reference count number of the determined storage block by 1.

In operation 1240, the display device determines whether the reference count number of the storage block is 0.

If the reference count number of the storage block is 0, in operation 1250, the display device switches the storage block to the un-link state. Accordingly, the storage block may store data of other files or be used by other processes.

On the other hand, if the reference count number of the storage block is not 0, in operation 1260, the display device maintains data of the corresponding storage block. Accordingly, the corresponding storage block is linked to a predetermined file, and may not be used by other files or other processes.

Hereinafter, various methods for generating a derived content file from an original content file will be described.

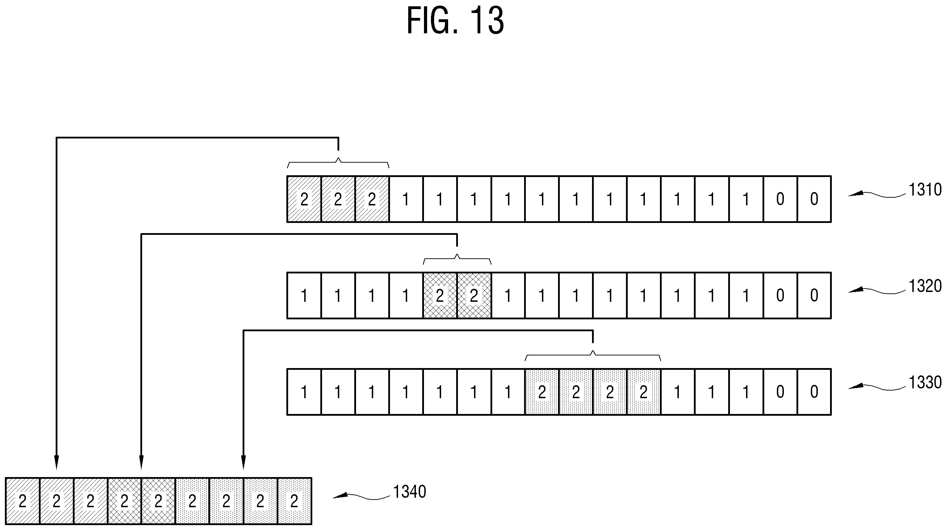

FIG. 13 is an exemplary diagram illustrating an aspect in which the display device according to the embodiment of the present disclosure generates one derived content file from a plurality of original files.

As illustrated in FIG. 13, the display device may generate one derived content file by acquiring and adding data from a plurality of original files, respectively. When there is a storage block in which data of a first file 1310 is stored, a storage block in which data of a second file 1320 is stored, and a storage block in which data of a third file 1330 is stored among the plurality of original files, the display device may acquire the data of the storage blocks of each original file 1310, 1320, and 1330 to generate a fourth file 1340.

In this case, the reference count number of the storage block linked to any one of the first file, the second file, and the third file among the storage blocks of the original files 1310, 1320, and 1330 is indicated as 1. On the other hand, among the storage blocks of the original files 1310, 1320, and 1330, a reference count number of the storage block linked to the fourth file 1340 is indicated as 2.

When the display device intends to play the fourth file 1340, the display device fetches data from a storage block having the reference count number of 2 in each of the original files 1310, 1320, and 1330. In this way, the display device may construct the derived content file from the data of the plurality of original files.

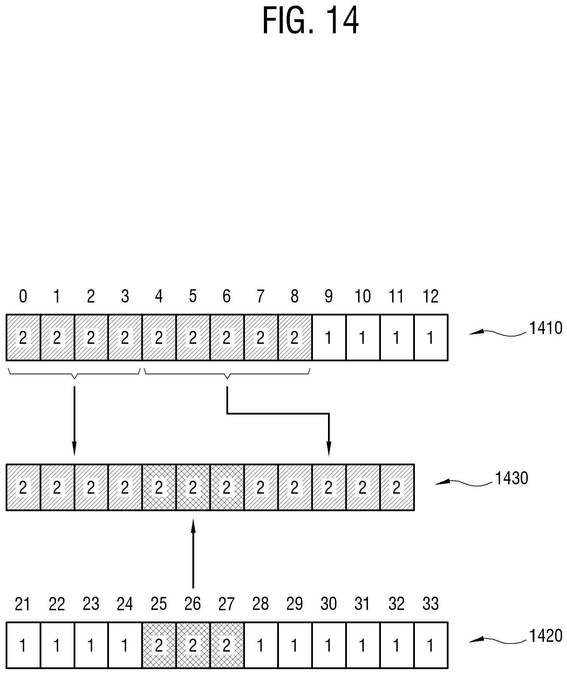

FIG. 14 is an exemplary diagram illustrating an aspect in which the display device according to the embodiment of the present disclosure generates one derived content file from a plurality of original files by adjusting a data order.

As illustrated in FIG. 14, the display device may fetch data from two original files 1410 and 1420, respectively, to generate a derived content file 1430. For example, it is assumed that data of the first file 1410 is stored from storage block Nos. 0 to 12, and data of the second file 1420 is stored from storage block Nos. 21 to 33. The display device may use the data from the storage block Nos. 0 to 8 of the first file 1410 and the data from the storage block Nos. 25 to 27 of the second file 1420 to construct the third file 1430.

In FIG. 14, each square represents an individual storage block, numbers above the square represents an index number of the storage block, and numbers within the square represents the reference count number of the storage block.

The display device adjusts a reference count number to 2 by adding the reference count number by 1 for the storage block Nos. 0 to 8 and the storage block Nos. 25 to 27. At this time, the display device may adjust a data playback order of the third file 1430 according to a user's instruction. For example, the display device may sequentially designate the data of the storage block Nos. 0 to 3 of the first file 1410, the data of the storage block Nos. 25 to 27 of the second file 1420, and the data of the storage block Nos. 4 to 8 of the first file 1410. At the time of playing the third file 1430, the display device acquires and plays data according to this order.

On the other hand, when the start point and the end point of the original content are designated from the application, some additional processing may be required to allow the section between these start point and the end point to be independently played as separate derived content. Hereinafter, examples of such a processing method will be described.

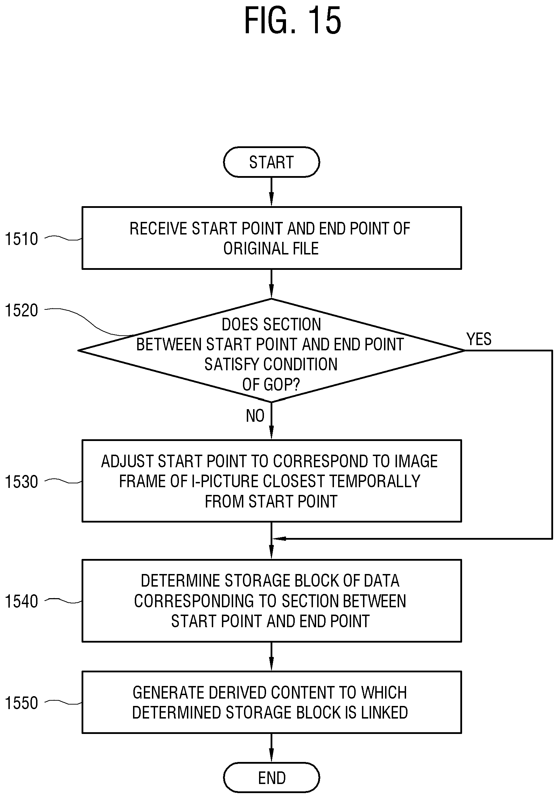

FIG. 15 is a flowchart illustrating a method of determining, by the display device according to the embodiment of the present disclosure, a storage block of original content corresponding to a received start point and end point.

As illustrated in FIG. 15, the display device performs the following operations by the processor.

In operation 1510, the display device receives the start point and the end point of the original file to generate the derived content file. Alternatively, the display device may receive the start point and a playback length, and in this case, it is possible to calculate the end point from the start point and the playback length.

In operation 1520, the display device determines whether a section between the input start point and end point satisfies conditions of group of pictures (GOP). The conditions of the GOP will be described later.

If the corresponding section does not satisfy the conditions of the GOP in operation 1530, the display device adjusts the start point so that the start point corresponds to a video frame of an I-picture closest temporally from the input start point. That is, the display device determines a first video frame corresponding to the input start point, determines a second video frame of the closest I-picture among the video frames temporally before or after the first video frame, and adjusts the start point so that the start point corresponds to the second video frame.

On the other hand, if the corresponding section satisfies the conditions of the GOP, the display device directly proceeds to operation 1540.

In operation 1540, the display device determines a storage block of data corresponding to the section between the start point and the end point. If the start point is adjusted in the previous operation, the display device determines a section starting from the adjusted start point. On the other hand, if the start point is not adjusted in the previous operation, the display device determines a section starting from the input start point.

In operation 1550, the display device generates derived content to which the determined storage block is linked.

Hereinafter, the conditions of the GOP and the I-picture will be described.

The video data or video signal includes a plurality of video frames arranged in time order. In the case of the video signal according to the MPEG standard, encoding compression of the video signal is performed by bi-directional prediction that performs prediction both from the past and the future, that is, from both the forward and reverse directions. A compression algorithm based on discrete cosine transform (DCT), an image segmentation that segments video into several pixels, and motion estimation and compensation are applied to the video signal. In particular, each video frame of the video signal has any one of three properties, such as intra-picture (I-picture), unidirectionally predicted picture (P-picture), and bidirectionally predictive picture (B-picture), based on temporal prediction and interpolation.

The I-picture or I-frame is a reference frame for decoding between video frames. The I-frame is a screen that is encoded by the corresponding video frame alone, and is a reference frame in which prediction between frames is not used. The I-frame may be anywhere in the video signal and is used for random access to data.

The P-picture or P-frame is a prediction screen between forward frames. The P-frame is generated from prediction between the temporally previous I-frame and the temporally previous other P-frame. The P-frame is based on the fact that the entire image of consecutive images does not change, but the blocks of the image move sideways. That is, in the case of motion, an object on the front screen often moves sideways without much change in its shape, so only the difference value is encoded using a very small difference between the previous screen and the current screen.

The B-picture or B-frame is a prediction screen between bi-directional frames. For compression of the B-frame, all previous and subsequent I-frames and P-frames are used. A high compression rate may be obtained by using the B-frame.

Since the I-frame can be encoded alone without prediction between other frames, random access to data is possible. This can be similarly applied to standards other than the MPEG standard. For example, the concept of the I-frame is used for the H.264 standard.

The decoding operation of the encoded video signal is performed by performing prediction between forward frames and prediction between bidirectional frames based on the I-frame. The GOP represents a group of video frames from a predetermined I-frame to the temporally next I-frame, and is a minimum unit in which the video signal can be independently played when some sections of the video signal are extracted.

Therefore, when the derived content is constructed by extracting a part of original content data, the derived content can be played only when including at least a section that satisfies the conditions of the GOP in the original content. In the display device according to the present embodiment, if the section between the input start point and the end point does not satisfy the conditions of the GOP, the selected section satisfies the conditions of the GOP by adjusting to a point of a I-frame closest temporally from the input start point.

On the other hand, in general, the video content data in a format such as the MPEG may be divided into a header containing overall information related to the video content and a payload containing actual data of the video content. When the display device plays the video content, first, the information recorded in the header is read, and payload data is read and processed based on header information.

The header includes various information such as a sync byte indicating a start of a data packet, a transport error indicator indicating whether or not there is an error in the data packet, a payload unit start indicator, which is flag information indicating whether or not original data is included to reassemble the entire data packet, a transport priority indicator indicating priority of the data packet, a PID classifying the data packet by type, transport scrambling control indicating whether or not the payload is scrambled, and adaptation field control indicating whether or not there is an adaptation field.

When the original file is stored in the storage block of the storage unit, the storage block stores not only the actual content data corresponding to the payload, but also the information corresponding to the header. When operating in response to the file-related event as in the embodiment described above, the display device may perform header-related processing according to various methods. Hereinafter, these embodiments will be described.

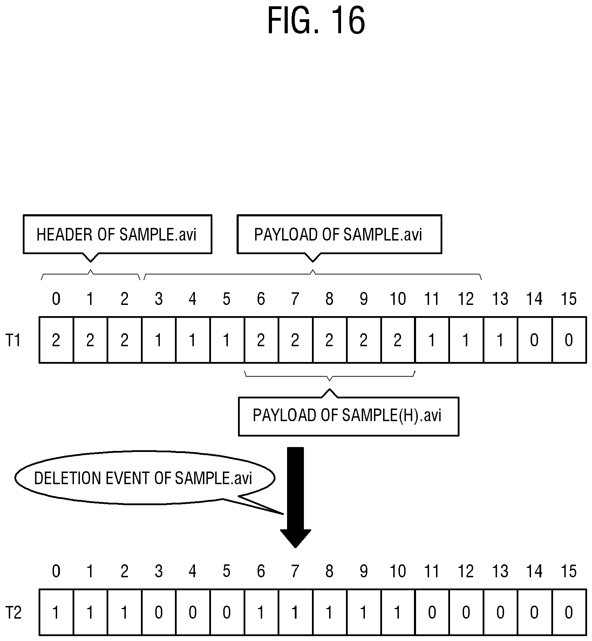

FIG. 16 is an exemplary diagram illustrating a method of adjusting, by the display device according to the embodiment of the present disclosure, reference count numbers of each storage block when an original file is deleted.

As illustrated in FIG. 16, at point T1, the display device stores the original file sample.avi in storage block Nos. 0 to 13. Header information of the sample.avi is stored from the storage block Nos. 0 to 2, and payload data of the sample.avi is stored from storage block Nos. 3 to 13. Here, the sample(h).avi of the derived content file shares data from the storage block Nos. 6 to 10 as the payload data.

Since the payload data of the sample (h).avi is part of the payload data of the sample.avi, the header information of the sample.avi may be used when playing the sample (h).avi. Therefore, the display device refers to the header information of the sample.avi similarly to the case of the sample.avi, and then reads and plays the payload data of the sample(h).avi.

The reference count numbers of each storage block at the point T1 is determined according to the same principle as in the previous embodiment. The storage blocks shared by the sample.avi and the sample (h).avi are the storage block Nos. 0 to 2 containing the header information and the storage block Nos. 6 to 10 containing the payload data. The reference count numbers of these storage blocks are 2. On the other hand, the storage blocks used only by the sample.avi are the storage block Nos. 3 to 5, and 11 to 13, which contain the payload data. The reference count numbers of these storage blocks are 1.

Hereinafter, the change in the case of point T2 after the deletion event of the original file sample.avi occurs will be described.

In response to the deletion event of the sample.avi at the point T2, the display device subtracts the reference count numbers of the storage block Nos. 0 to 13 corresponding to the sample.avi by 1, respectively. Accordingly, the reference count numbers of the storage block Nos. 3 to 5 and 11 to 13 are respectively 0, and the display device switches these storage blocks to the un-link state.

Meanwhile, the reference count numbers of the storage block Nos. 6 to 10 in which the payload data of the sample (h) .avi is stored and the storage block Nos. 0 to 2 in which the header information of the sample.avi is stored are 1, respectively. The display device maintains the link state for the sample(h).avi of these storage blocks.

As described above, when the derived content file refers to the header of the original file, the display device counts the reference count number by adding 1 to the reference count number of the storage block in which the header of the original file is stored, as in the case of the shared payload data. Thereby, when the original file is deleted, the display device may maintain a header file of the original file so that the derived content file refers to the original file.

On the other hand, in the embodiment described above, the case where the derived content file can refer to the header information of the original file has been described. However, depending on the format characteristics or other factors of the file, there may be the case in which the derived content file cannot use the header information of the original file. In this case, the header information for the derived content file is separately required, and thus, the embodiment thereof will be described below.

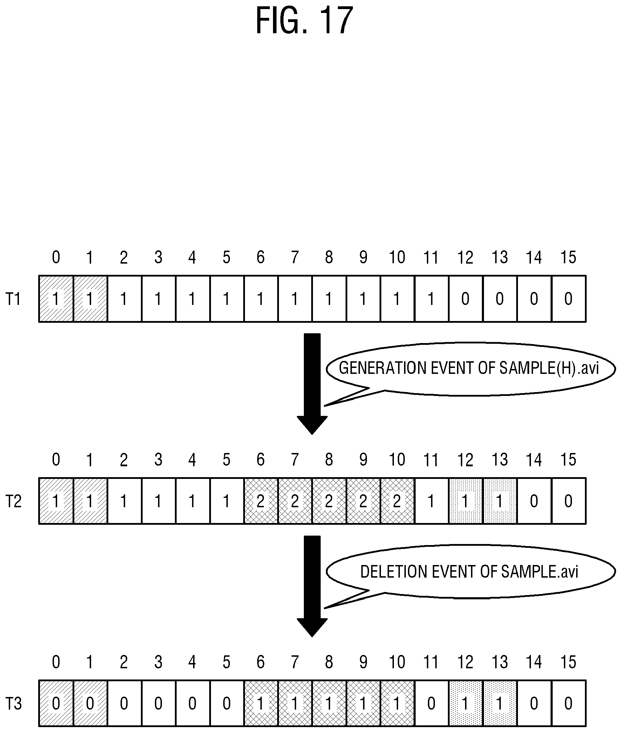

FIG. 17 is an exemplary diagram illustrating a method of adjusting, by the display device according to the embodiment of the present disclosure, reference count numbers of each storage block when header information for a derived content file is separately generated.

As illustrated in FIG. 17, at point T1, the plurality of storage blocks stores the original file sample.avi. Of the storage block Nos. 0 to 11, the header information of the sample.avi is stored in the storage block Nos. 0 and 1, and the payload data of the sample.avi is stored in the storage block Nos. 2 to 11, respectively. Accordingly, the reference count numbers of the storage block Nos. 0 to 11 are 1.

The situation at the point T2 when the generation event of the derived content file sample(h).avi occurs in this state at the point T1 will be described below. For example, a case is considered in which the payload data of the sample(h).avi corresponds to the data of the storage block Nos. 6 to 10 among the payload data of the sample.avi. In this case, in the display device, the reference count numbers of the storage block Nos. 6 to 10 are 2 by adding 1 to 1.

Here, if the header information of the sample.avi cannot be used during the playback of the sample(h).avi, the display device generates header information of the sample(h).avi based on the header information of the sample.avi. The display device stores the header information of the generated sample(h).avi in a predetermined storage block that is unlinked, for example, the storage block Nos. 12 and 13. Then, the display device counts the reference count number of the corresponding storage block as 1 by adding 1 to 0.

The storage block Nos. 0 to 5 and the storage block No. 11 are linked to the sample.avi but are not linked to the sample(h).avi, so the reference count number 1 is maintained.

When the sample.avi is played, the display device refers to the header information of the sample.avi in the storage block Nos. 0 and 1. On the other hand, when the sample(h).avi is played, the display device refers to the header information of the sample(h).avi newly stored in the storage block Nos. 12 and 13.

The situation at point T3 when the deletion event of the original file sample.avi occurs in this state at point T2 will be described below. In response to the deletion event of the sample.avi, the display device determines the storage block Nos 0 to 11 in which the header information and the payload data of the sample.avi are stored. The display device subtracts the reference count numbers of the storage block Nos. 0 to No. 11 by 1, respectively.

By subtracting the reference count numbers, the reference count numbers of the storage block Nos. 0 to 5 and the storage block No. 11 are 0. The display device switches the storage block whose reference count number is 0 to the un-link state.

However, since the reference count numbers of the storage block Nos. 6 to 10 used by the sample(h).avi is 1, the display device maintains the link state of the corresponding storage block. In addition, since the storage block Nos. 12 and 13 in which the header information of the sample (h).avi is stored are independent of the sample.avi, the reference count number is continuously maintained at 1.

In this way, even if the sample.avi is deleted, the header information and the payload data of the sample(h).avi are maintained in the storage block, so that the display device may read and play the sample(h).avi later.

Methods according to exemplary embodiments of the present disclosure may be implemented in a form of program commands that may be executed through various computer means and may be recorded in a computer-readable recording medium. The computer-readable recording medium may include a program command, a data file, a data structure or the like, alone or a combination thereof. For example, the computer-readable recording medium may include a volatile or non-volatile storage such as a read only memory (ROM), a memory such as a random access memory (RAM), a memory chip, a device, or an integrated circuit, or a storage medium optically or magnetically writable and readable by a machine (for example, a computer), such as a compact disk (CD), a digital versatile disk (DVD), a magnetic disk, a magnetic tape, or the like, regardless of whether data are erasable or rewritable. It may be appropriated that a memory that may be included in a mobile terminal is an example of a storage medium appropriate for storing a program or programs including instructions implementing exemplary embodiments of the present disclosure and readable by a machine. The program instructions recorded in this storage medium may be specially designed and constructed for the present disclosure or may be known and usable by those skilled in the art of computer software.

## Claims

1. An electronic apparatus, comprising:
a storage unit provided to store data of a file; and
a processor configured to:
store data of a first file in a data area of the storage unit in units of block,
store file information of a second file indicating a location of a first block corresponding to a part of the first file and usage information indicating a usage state of the first block by one or more files in an information area of the storage unit, in response to a generation instruction of the second file corresponding to the part of the stored first file,
read data of the first block at a location at which the file information of the second file stored in the information area is indicated, in response to an execution instruction of the second file, and
change the usage information stored in the information area regarding the usage state of the block of the first file including the first block in response to a deletion instruction of the first file, and allows data of other files to be stored in a second block other than the first block among the blocks of the first file according to the changed usage information.

2. The electronic apparatus of claim 1, wherein the usage information includes count information that is assigned to a plurality of blocks of the storage unit and indicates the number of files using each of the blocks.

3. The electronic apparatus of claim 2, wherein the processor increases and decreases the count information of any of the blocks in response to a change in the number of files using any one of the blocks.

4. The electronic apparatus of claim 2, wherein the processor maintains data of any one of the blocks when the count information of any one of the blocks is equal to or greater than a preset value, and allows the data of the other files to be stored without maintaining the data of any one of the blocks when the count information of any one of the blocks is less than the preset value.

5. The electronic apparatus of claim 1, wherein the processor deletes file information of the first file designating addresses of the blocks of the first file from the information area in response to the deletion instruction of the first file.

6. The electronic apparatus of claim 1, wherein the processor updates the usage information to indicate that the first block is not used by the first file but is used by the second file in response to the deletion instruction of the first file.

7. The electronic apparatus of claim 1, wherein the processor performs processing to display a UI that enables a user to select a part of the entire playback section of the first file, and generates the second file by some data of the first file selected through the UI.

8. The electronic apparatus of claim 7, wherein the processor determines a location of the block used by the second file based on file information of the first file received through the UI and information on a start point and a playback time of the second file in the entire playback section of the first file.

9. The electronic apparatus of claim 1, wherein the processor determines a playback section from a predetermined first point to a second point of the first file from the generation instruction of the second file, and adjusts the first point to correspond to a video frame of an intra-picture (I-picture) that is temporally adjacent from the first point when the playback section does not satisfy a condition of group of pictures (GOP).

10. The electronic apparatus of claim 1, wherein the processor blocks the data of the other files from being stored in a block storing header information of the first file and a block storing payload data of the first file used by the second file among a plurality of blocks in which the data of the first file is stored in response to the deletion instruction of the first file.

11. A control method of an electronic apparatus, comprising:
storing data of a first file in a data area of a storage unit in units of block;
storing file information of a second file indicating a location of a first block corresponding to a part of the first file and usage information indicating a usage state of the first block by one or more files in an information area of the storage unit in response to a generation instruction of the second file corresponding to the part of the stored first file;
reading data of the first block at a location at which the file information of the second file stored in the information area is indicated in response to an execution instruction of the second file; and
changing the usage information stored in the information area regarding the usage state of the block of the first file including the first block in response to a deletion instruction of the first file, and allowing data of other files to be stored in a second block other than the first block among the blocks of the first file according to the changed usage information.

12. The control method of claim 11, wherein the usage information includes count information that is assigned to a plurality of blocks of the storage unit and indicates the number of files using each of the blocks.

13. The control method of claim 12, wherein the count information of any of the blocks increases and decreases in response to a change in the number of files using any one of the blocks.

14. The control method of claim 12, wherein data of any one of the blocks is maintained when the count information of any one of the blocks is equal to or greater than a preset value, and the data of the other files is allowed to be stored without maintaining the data of any one of the blocks when the count information of any one of the blocks is less than the preset value.

15. The control method of claim 11, wherein file information of the first file designating addresses of the blocks of the first file is deleted from the information area in response to the deletion instruction of the first file.
